# EUROPÄISCHE PATENTANMELDUNG

(11) **EP 1 775 272 A2**
(43) Veröffentlichungstag der Anmeldung: **18.04.2007**
(21) Anmeldenummer: 06019419.8
(22) Anmeldetag: 16.09.2006
(51) Int. Cl.: C04B 28/10

(54) **Verfahren zur Beschichtung von Wänden und Decken sowie Putz zur dauerhaften Verhinderung von Schimmelpilzbefall**

(30) Priorität: 11.10.2005 DE 102005048538
(71) Anmelder: Rehberger, Peter, 68167 Mannheim (DE); Zimmermann, Jürgen, 68167 Mannheim (DE)
(72) Erfinder: Rehberger, Peter, 68167 Mannheim (DE); Zimmermann, Jürgen, 68167 Mannheim (DE)
(74) Vertreter: Zellentin, Wiger

(57) **Zusammenfassung**

Die vorliegende Erfindung betrifft ein Verfahren zur schimmelpilzresistenten Beschichtung von Gebäudewänden mit einem Wasser, Kalk und Vermiculit enthaltenden Putz, wobei man erfindungsgemäß den Putz in einer Mischung aus 25 bis 50 Gew.-% Sumpfkalk, 5 bis 20 Gew.-% Vermiculit und 5 bis 20 Gew.-% Wasser auf die Wände aufträgt.

## Beschreibung

Die vorliegende Erfindung betrifft ein Verfahren zur Beschichtung von Wänden und Decken sowie einen gebrauchsfertigen nanoporösen Antikondensationsputz für Wände und Decken in Innenräumen, der nach dem Auftrag keine weitere Überarbeitung der Oberfläche erfordert. Der Putz ist schimmelresistent und kann auf Schimmelpilz befallenes Mauerwerk und Bauteile aufgetragen werden, um die Ursachen für die Schimmelpilzbildung durch Kondensationsfeuchte zu beseitigen und den Einsatz von Fungiziden überflüssig zu machen. Der Einsatz der Beschichtung ist Schimmelbekämpfung, Prophylaxe und Raumgestaltung in einem.

Die Schimmelpilzproblematik in Innenräumen ist eine Erscheinung mit steigender Tendenz. Dass eine dauerhafte Bekämpfung von Schimmelpilzen in Innenräumen nur über den systematischen Entzug der Lebensgrundlagen zu erreichen ist, wird immer mehr anerkannt. In offiziellen Publikationen wie der des Umweltbundesamtes und der Landesgesundheitsämter wird ebenso beschrieben, dass der Einsatz von Bioziden ein Schimmelpilzwachstum nicht auf Dauer verhindert. Außerdem wird vor den möglichen Folgen der Biozide in Innenräumen gewarnt.

Es sind aus dem Stand der Technik Antikondensationsputze bekannt, die Vermiculit in Gegenwart von Quarzsand und Kalk verwenden. Vermiculit ist ein expandiertes Aluminium-Eisen-Magnesiumsilikat und wird aus Glimmer durch Temperatureinwirkung hergestellt, wobei ein Material mit sehr hoher Wasseraufnahmefähigkeit und Wärmedämmung entsteht.

Ein solcher Putz ist z.B. in der DE 2917263 beschrieben. Er besteht aus 67 - 83 % eines leichten porigen Zuschlagsstoffes wie z.B. Vermiculit, einem Bindemittel, oberflächenaktivem, nicht ionogenem Stoff und neben anderem bis zu 1 % Fungizid. Nachteilig ist dabei z.B. die Anwesenheit eines Fungizids, diese stellen bekanntermaßen gesundheitsgefährdende Belastungen dar. Ferner enthält dieser Putz organische Substanzen, die wieder eine Nahrungsquelle für Schimmelpilze darstellen.

Aus der eigenen nicht vorveröffentlichten DE 20 2004 020 646 U1 ist ein gegen Schimmelbefall resistenter Putz aus Kalk, Sand und Vermiculit in bestimmten Mischungsverhältnissen bekannt.

Die DE 101 21 419 A1 offenbart die Reinigung von Raumluft, wobei der dort vorgeschlagenen Putz Schadstoffe aus der Luft aufnimmt und irreversibel bindet. Die Verhinderung und Bekämpfung von Schimmelbefall ist hier nicht angesprochen.

Die Aufgabenstellungen, die der Erfindung zu Grunde lagen, sind die folgenden:

Es soll eine kostengünstige, dauerhafte und gesundheitsverträglich Schimmelsanierung geschaffen werden, die nicht wesentlich teuerer ist, als eine ordentliche Renovierung.

Das Oberflächensystem soll eine ansprechende Raumgestaltung ermöglichen.

Das Oberflächensystem soll nicht auf das kurz- und mittelfristige Vergiften setzen, sondern Schimmelpilze auf Dauer aushungern.

Vom Oberflächensystem soll keinerlei gesundheitliche Belastung für die Nutzer ausgehen.

Das Oberflächensystem soll neben seiner Unbedenklichkeit für die Nutzer positiven Einfluss auf die Gestaltung eines gesunden Raumklimas nehmen.

Es soll dem wachsenden Bedürfnis nach natürlichen Ressourcen Rechnung tragen.

Das System muss von allen Betroffenen genutzt werden können, unabhängig von der Bauart des betreffenden Gebäudes.

Das System soll aus möglichst wenigen nachvollziehbaren volldeklarierten Inhaltsstoffen bestehen und in wenigen Arbeitsgängen und besonders leicht verarbeitbar sein. Die Verarbeitung sollte auch dem Heimwerker möglich sein.

Die Aufgabe wird erfindungsgemäß mit einer Beschichtung gemäss Hauptanspruch gelöst. Vorteilhafte Ausgestaltungen finden sich in den Unteransprüchen.

Der systematische Entzug der Lebensgrundlagen von Schimmel wird erfindungsgemäß über die Nutzung bauphysikalischer Eigenschaften der eingesetzten Materialien gewährleistet. Der erfindungsgemäße Putz stellt durch seine nanoporösen Strukturen bereits in einer Auftragsstärke von 2 bis 3 mm einen komfortablen Feuchtepuffer dar, der einer Auskeimung von Schimmelpilzsporen und der Myzelbildung systematisch die Entwicklungsgrundlage entzieht.

Die entscheidenden Entwicklungsfaktoren zur Schimmelpilzbildung sind:
ein Nährboden (Substrat) aus verwertbarem organischen Bestandteilen und ein Mindestmaß an Feuchtigkeit das im Substrat über einen ausreichenden Zeitraum vorliegt. Die Erfindung weist physikalische Eigenschaften auf, die in mehrfacher Hinsicht diesen Entwicklungsfaktoren entgegenwirken.

Die Erfindung stellt ein System der mehrfachen Sicherheiten dar.

### Sicherheitsfaktor Wasserdampfdurchlässigkeit (Diffusion)

Die mit dem Material überarbeitete Oberfläche setzt Wasserdampf keinen nennenswerten Widerstand entgegen. Im Vergleich zu einer mit Dispersionsfarbe gestrichenen Oberfläche ist der Widerstand um das 100-fache kleiner. Wasserdampf kann also ungehindert aufgenommen werden.

### Sicherheitsfaktor hygroskopische Eigenschaften

Die aufgetragene Putzschicht ist in der Lage, Wasserdampf bis zum Erreichen der Ausgleichsfeuchte aufzunehmen, zu speichern und nach dem Lüften wieder an die Raumluft abzugeben. Das hygroskopisch nanoporöse Material bindet die Wassermoleküle des eindringenden Dampfes an die Wassermoleküle des im Material vorhandenen Wassers. Weil der Dampf im Material zu flüssigem Wasser wird, können auch dünne Putzstärken große Mengen Wasserdampf aufnehmen. So werden auch mit Putzstärken von 2 bis 3 mm komfortable Feuchtepuffer geschaffen.

### Sicherheitsfaktor Sorption

Unterschiedliche Materialien nehmen bei gleicher relativer Feuchte verschiedene Mengen Wasser auf bis die Ausgleichsfeuchte erreicht wird. Die Ausgleichsfeuchte stellt sich ein, wenn der Partialdruck im Material dem Dampfdruck der Raumluft entspricht. Wie viel Wasser die einzelnen Baustoffe bis zu ihrer Ausgleichsfeuchte aufnehmen können hängt von der jeweiligen Porenstruktur ab.

Die oben genannten Eigenschaften garantieren ein ausgeglichenes Feuchteklima. Die Spitzen zu hoher und zu niedriger Raumluftfeuchte werden genommen. In einem Raum dessen Wände mit dem Oberflächensystem ausgestattet sind ist unter normalen Bedingungen ein länger anhaltendes Überschreiten einer relativen Raumluftfeuchte von 75 % praktisch nicht möglich.

Der erfindungsgemäß hergestellte nanoporöse Oberflächenputz verhindert Schimmelpilzbildung auf Wärmebrücken.

Eine dünne Putzschicht, wie sie mit dem Oberflächensystem gestaltet wird, beseitigt keine Wärmebrücken, aber sie verhindert Schimmelpilzwachstum.

Da der Putz ein ausgeglichenes Feuchteklima schafft, bei dem das hohe Ansteigen der relativen Luftfeuchtigkeit verhindert wird, hat dies ganz konkret Auswirkung auf einen möglichen Tauwasserausfall auf Wärmebrücken. Die Wahrscheinlichkeit, dass es dazu kommt wird herabgesetzt.

Kommt dennoch ein Tauwasserausfall vor, so wirken weitere Sicherheitsfaktoren, die einen Schimmelbefall verhindern.

### Sicherheitsfaktor Wasseraufnahmefähigkeit

Konnte Tauwasserausfall nicht völlig ausgeschlossen werden so bewirken die Kapillarkräfte des Putzes dass das Wasser, das ja nun flüssig und nicht mehr in Dampfform vorliegt rasch ins Putzinnere befördert wird.

### Sicherheitsfaktor Rücktrocknung

Um Schimmelpilzbildung dauerhaft zu verhindern, ist ein weiterer wichtiger Faktor die Dauer der Rücktrocknung. Entscheidend ist hierfür die innere Oberfläche des Putzes.

### Sicherheitsfaktor Alkalität

Die meisten Schimmelpilze benötigen ein leicht saueres bis neutrales Milieu. Hoch alkalische Materialien stellen kein geeignetes Substrat für eine Schimmelpilzansiedlung dar.

### Sicherheitsfaktor Anorganisches Material

Schimmelpilze benötigen zum Wachstum ein Substrat aus verwertbarem organischem Material. Die vorliegende Erfindung verzichtet auf jegliche organischen Inhaltsstoffe.

Die hochleistungsfähige Porenstruktur erhält der Putz über die ausgeglichene Zusammensetzung seiner Bestandteile insbesondere durch den hohen Anteil an Calciumhydroxid in Form von Sumpfkalk.

REM-Aufnahmen belegen die bis in den Bereich weniger Nanometer feine Porenstruktur des Putzes. Die nanoporöse Struktur des Antikondensationsputzes weist entsprechend große innere Oberflächen auf, die unter anderem die enormen Sorptionskräfte des Materials erklären.

Calciumhydroxid wird in der vorliegenden Erfindung als alleiniges Bindemittel eingesetzt. Die nanoporöse Struktur des Anitkondensationsputzes bildet sich unter anderem während des Kristallisationsprozesses des Calciumhydroxids. Für den Verlauf der Ausbildung der Calciumhydroxid-Kristalle ist dabei die Qualität des verwendeten Kalks, die Brenntemperatur, das Löschwasser und der Löschvorgang ausschlaggebend.

Der Einfluss des Einsumpfens von Löschkalk auf die Mörtelqualität wurde in einem gemeinsamen Forschungsprojekt der Universität Granada/Spanien und des Getty Conservation Institute/USA untersucht. Hier wird anschaulich dargestellt, dass sich Mörtel aus Kalkhydrat ganz entscheidend von dem aus eingesumpften Calciumhydroxid unterscheidet.

Im Gegensatz zu den im Stand der Technik angeführten Beispielen enthält der erfindungsgemäße Putz als alleiniges Bindemittel Calciumhydroxid ohne weitere organischen Beimischungen.

Die Zusammensetzungen des Standes der Technik bestehen neben einem Anteil an Kalkhydrat zusätzlich aus hydraulischen oder synthetischen Bindemitteln, die einen ganz anderen Abbindeprozess vollziehen und als Ergebnis andere physikalische Eigenschaften aufweisen.

Wird Calciumhydroxid als alleiniges Bindemittel eingesetzt und wird auf Zuschläge die hydraulische Wirkung haben verzichtet, dann findet das Abbinden allein in Form der Carbonatisierung statt.

Dabei ist folgendes zu berücksichtigen:
Aus Kalkstein, dem Calciumcarbonat CaCO₃, entsteht durch Abgabe von CO₂ während des Brennens das Vorprodukt Calciumoxid CaO, welches so nicht verwendbar ist. Nach dem Löschen erhält man das Rohprodukt Calciumhydroxid Ca(OH)₂, Wird das Calciumhydroxid nun als alleiniges Bindemittel zum Beispiel in einem Putz verarbeitet, erfolgt die Aufnahme von CO₂ aus der Luft und es entsteht schließlich wieder Kalkstein (CaCO₃). Somit ist der Kalkkreislauf geschlossen.

Man unterscheidet im wesentlichen 2 Arten des Löschens:
a) Das Löschen kann als Trockenlöschen vorgenommen werden, das heißt dem CaO (Branntkalk) wird soviel H₂O (Wasserdampf) zu geführt, bis Ca(OH)₂ (Calciumhydroxid) in pulvriger Form vorliegt.
b) Das Löschen erfolgt mit Wasser (H₂O) das in der 2 bis 2,5 fachen Menge dem Branntkalk (CaO) zugeführt wird. Man spricht von Sumpfen folglich die Bezeichnung Sumpfkalk. Es entsteht Ca(OH)₂ also Calciumhydroxid in Form eines Kalkbreies.

Das Trockenlöschverfahren ist heute das industriell gängige Herstellungsverfahren von Calciumhydroxid was fachsprachlich falsch (vergl. Römpp Chemie Lexikon) als Kalkhydrat bezeichnet wird.

Die Herstellung von Sumpfkalk aus Calciumoxid ist das aufwendigere Verfahren und wird heute nur noch selten praktiziert. Bei beiden Verfahren entsteht chemisch gesehen das gleiche Produkt. Physikalisch, kristallographisch aber unterscheiden sich beide Sorten sehr stark.

Beim Kalkhydrat ändert sich nach Beendigung des Löschvorganges die Struktur nicht mehr merklich. Selbst beim Anmischen eines Putzes unter Hinzugabe von Wasser bleibt das Gefüge im Wesentlichen beibehalten.

Beim Sumpfkalk hingegen reift das Material weiter. Der Kalkbrei ist eine Suspension von feinsten Calciumhydroxid -Teilchen in Wasser. Durch den Sumpfvorgang findet eine Langanhaltende Kristallisation statt in der die innere Oberfläche zunimmt. Dies geschieht zum einen dadurch, dass die Calciumhydroxid-Kristalle eine verringerte Kristallgröße besitzen und zum anderen weil sich die Morphologie verändert. Es liegen nicht nur gleich große prismenförmige Kristalle vor, sondern auch bedeutend kleinere plättchenförmige Kristalle.

Die Kristallstruktur nimmt einen entscheidenden Einfluss auf den Verlauf der Carbonatisierung. Diese Materialeigenschaften werden hauptsächlich in der Restauration von Kirchen und Denkmälern genutzt, indem nur langjährig eingesumpfter Kalk verwendet wird.

Die Verwendung von CO₂-haltigem Wasser und insbesondere von Quellwasser in der vorliegenden Erfindung nimmt zusätzlich wesentlichen Einfluss auf die Kristallisation des Calciumhydroxids und die Carbonatisierung.

Die Verwendung von CO₂-haltigem Wasser oder insbesondere von Quellwasser aus einer Gebirgsregion sowohl für den Löschvorgang, als auch für die Putzherstellung bringt ein Produkt von einzigartiger Qualität hervor.

Der Anteil an Vermiculit in der Erfindung fördert die oben genannte Bildung feinstkristalliner Strukturen in überraschender Weise und erhöht die innere Oberfläche und damit die Sorptionswirkung des Putzes erheblich. Vermiculite können enorm viel Wasser aufnehmen und weisen ein hohes Wasserrückhaltevermögen auf.

Das Mischverhältnis Vermiculite zu Calciumhydroxid ist so ausgewogen, dass die Mischung überdurchschnittlich viel Wasser aufnehmen kann bei gleichzeitiger Gewährleistung einer schnellen Rücktrocknung. Die beschriebenen Eigenschaften der Vermiculite bringen in der Dosierung weitere entscheidende Vorteile mit sich:
1. weist die Mischung jetzt ein für den Carbonatisierungsprozess notwendiges ausreichendes Wasserrückhaltevermögen auf. Dadurch kann auf den Zusatz von Zellulose oder andere organische Zuschläge verzichtet werden. Auch der Zusatz von hydraulischen Bindemitteln erübrigt sich dadurch. Der Putz bleibt durch den Anteil an Vermiculit lange genug offen um carbonatisieren zu können. Alle auf dem Markt befindlichen Oberflächenputze die auf das Bindemittel Calciumhydroxid bauen und die in nur dünnen Schichtstärken von bis zu 3 mm aufgetragen werden geben zur Verbesserung des Wasserrückhaltevermögens Zusätze bei, auf die erfindungsgemäß verzichtet werden kann.
2. Durch die Vermiculite in der Putzmischung ist eine lang anhaltende Carbonatisierung gewährleistet die eine lang anhaltende Alkalität sicherstellt.
   Versuche haben ergeben, dass eine erfindungsgemäße Beschichtung einer Gebäudewand nach Jahren noch einen pH von 11 aufweist, also stark alkalisch ist.
3. Die Mischung erhält durch den bestimmten Anteil an Vermiculit die Eigenschaft, nach der Durchtrocknung das Feuchteklima im Innenraum ausgeglichen zu gestalten. Sowohl die Spitzen einer zu feuchten, als auch einer zu trockenen Raumluft werden genommen.

Die Beimengung des Glasgranulats in der vorliegenden Erfindung verbessert die Verarbeitungsfähigkeit des Materials. Man kann sich bildlich vorstellen wie das Werkzeug auf Kugeln gelagert über die Oberfläche gleitet. Neben diesen mechanischen Eigenschaften trägt auch das Glasgranulat aufgrund seiner Struktur zur Erhöhung der inneren Oberfläche des Putzes bei. Außerdem hilft das Granulat den hohen pH-Wert des Putzes langfristig zu stabilisieren.

Weiterhin geht die Erfindung von der Tatsache aus, dass herkömmliche Vermiculite enthaltene Mischungen mit Kalk und Sand einen nachträglichen Farbauftrag erfordern, da diese Produkte eine schmutzige, grau fahle Färbung besitzen. Eine ansprechende Raumgestaltung mittels dieser Mischungen allein ist nicht zu erzielen. Eine Gestaltung der Oberflächen macht die Überarbeitung:
- durch einen zusätzlichen Farbauftrag
- durch Bekleben mit Tapeten
- durch das Aufbringen anderer Wandbeläge
erforderlich.

Ein Anstrichmittel, das die gewünschten bauphysikalischen Eigenschaften nicht negativ beeinflusst, ist reiner Sumpfkalk mit kalkechten Pigmenten in der Frescotechnik aufgetragen. Diese Anwendung ermöglicht zwar eine akzeptable optische Oberflächengestaltung aber mit geringer mechanischer Beanspruchbarkeit. Was zur Folge hat, dass kleinste Kratzer und Abschürfungen im nur wenige µm starken Anstrich den Putz wieder hervorschauen lassen und häufig Ausbesserungen erforderlich machen. Diese Arbeiten müssen dann aber in der Seccotechnik ausgeführt werden, welche dann den Einsatz von Hilfsmitteln zur Herabsetzung der Saugfähigkeit notwendig macht und nicht mehr punktuell, sondern vollflächig auszuführen sind. Deshalb ist der einfache Sumpfkalkanstrich zur Farbgestaltung normal beanspruchter Räume bei diesem Putzsystem keine adäquate Lösung.

Alle anderen Farbaufträge oder Verkleidungen mit Dispersionsfarben, Tapeten, etc. sind insofern nachteilig, als sie die oben beschriebenen bauphysikalischen Eigenschaften des Aufbaus nachteilig beeinflussen, sowie organisches Material einbringen, was die Wirkungsweise des Systems in Frage stellt.

Die Erfindung hat sich daher die weitere Aufgabe gestellt, derartige Mischungen dahingehend zu modifizieren, dass ein nachträgliches Überarbeiten überflüssig wird. So soll gewährleistet werden, dass die gewünschten bauphysikalischen und chemischen Eigenschaften des Putzes voll zum Tragen kommen können. Außerdem werden dabei zusätzliche Arbeitsgänge eingespart.

Dazu müssen sich die Mischungen mit Hilfe von Pigmenten homogen einfärben lassen. Färbt man, auf dem Markt befindliche Antikondensationsputze, die aus Sand und Vermiculit bestehen, homogen ein so fehlt den getrockneten Putzen die Brillanz. Schwach eingefärbte Putze bewegen sich immer ins Graue und wirken fahl. Vom Anspruch ästhetischer Raumgestaltung kann nicht die Rede sein. Es wird immer wieder in der Literatur beschrieben wie problematisch die Eigenfärbung der Vermiculite in Bezug auf die Einfärbbarkeit ist. Es ist uns kein Putz außer unserer Erfindung bekannt der tatsächlich Vermiculite enthält und zum Zwecke der Raumgestaltung homogen eingefärbt wird.

Die Lösung des Problems gelingt, indem der Quarzsand durch weißen Marmorsand ersetzt wird. Mit einer ausgewogenen Sieblinie weißen Marmorkorns, feinteiliger Schlämme aus gelöschtem Kalk, expandiertem Glimmerschiefer und der Zugabe von Wasser lässt sich eine Mischung herstellen, die sich hervorragend einfärben lässt.
Selbst bei nur geringen Pigmentbeigaben unter 1 % lassen sich brillante Farbtöne erzielen.

Da das Weiß des Marmors ebenso wie der weiße Sumpfkalk das gesamte Farbspektrum des Sonnenlichtes beinhaltet, können die Farben der eingesetzten Pigmente auch weitgehend unverfälscht wirken. Beim Quarzsand hingegen werden Farben "geschluckt", "vergraut" und "verfälscht". Der verwendete Marmorsand verfügt über einen Weissgrad von 98 % (nach Dr. Lange, Korn < 3mm, ohne Filter (Barytweiss 99%)). Er trägt somit ganz wesentlich zur Einfärbbarkeit des Putzes bei.

Der beschriebene Marmorsand wird nicht nur wegen seiner Farbgebung sondern auch auf Grund seiner Morphologie verwendet. Der Sand besteht zu 97,83% aus CaCO₃. Er entspricht damit chemisch gesehen weitgehend dem Ausgangsmaterial aus dem das verwendete Calciumhydroxid hergestellt wurde. Da nach der Carbonatisierung des Calciumhydroxid wieder Calciumcarbonat entsteht stellt das Bindemittel und die eingebundene Sandkörnung eine ideale homogene Struktur dar.

Die Erfindung ermöglicht erstmals den Einsatz eines Sumpfkalk-Vermiculite-Putzes ohne weitere Überarbeitung und nachträglicher, zusätzlicher Farbgestaltung. Dies führt dazu dass die Oberfläche offen bleibt und optimal die Feuchtigkeitsregulierung wahrnehmen kann.

Die Mischungsverhältnisse zur Herstellung des Putzes sind dabei insbesondere die folgenden **Volumenprozente**:

| | |
|---|---|
| 30 bis 75 % | weißer Marmor |
| 25 bis 50 % | Sumpfkalk |
| 5 bis 20 % | Vermiculit |
| 5 bis 20 % | Wasser |
| 1 bis 10 % | Glasgranulat |
| 1 bis 10 % | Pigmente |

Eine bevorzugte Mischung ist

| | |
|---|---|
| 1 | Raumteil Marmorsand |
| 0,9 | Raumteile Sumpfkalk (Viskosität anrührfähig eingestellt) |
| 0,24 | Raumteile Vermiculit |
| 0,2 | Raumteile Wasser |
| 0,1 | Raumteile Glasgranulat und bis zu |
| 0,1 | Raumteile Pigment |

Putzproben derartiger Mischungen weisen noch nach Jahren die Anwesenheit von Calciumhydroxid auf. Nach der Durchfeuchtung mit destilliertem Wasser kann noch ein pH-Wert von 10 festgestellt werden.

## Patentansprüche

1. Verfahren zur schimmelpilzresistenten Beschichtung von Gebäudewänden und -decken, bei dem eine von organischen Komponenten freie Putzmischung aus
• 15 bis 60 Volumen-% Sumpfkalk, dessen Viskosität anrührfähig eingestellt ist, als alleinigem Bindemittel,
• 5 bis 20 Volumen-% Vermiculit,
• 1 bis 10 Volumen-% Glasgranulat,
• 30 bis 75 Volumen-% weißem Marmorsand
• und 5 bis 20 Volumen-% Wasser,
wobei sich die Angaben zu 100 % ergänzen, erstellt und auf die Wände und Decken aufgetragen wird.

2. Verfahren nach Anspruch 1, **dadurch gekennzeichnet, dass** eine Putzmischung aufgetragen wird, die bis 10 Volumen-% anorganische Farbpigmente enthält.

3. Schimmelpilzresistente, von organischen Komponenten freie Putzmischung aus
• 15 bis 60 Volumen-% Sumpfkalk, dessen Viskosität anrührfähig eingestellt ist, als alleinigem Bindemittel,
• 5 bis 20 Volumen-% Vermiculit,
• 1 bis 10 Volumen-% Glasgranulat,
• 30 bis 75 Volumen-% weißem Marmorsand
• und 5 bis 20 Volumen-% Wasser,
wobei sich die Angaben zu 100 % ergänzen,

4. Putzmischung nach Anspruch 3, **dadurch gekennzeichnet, dass** sie bis 10 Volumen-% anorganische Farbpigmente enthält.
